# EUROPÄISCHE PATENTSCHRIFT

(11) **EP 4 080 044 B1**
(45) Veröffentlichungstag und Bekanntmachung des Hinweises auf die Patenterteilung: **12.04.2023**
(21) Anmeldenummer: 21170223.8
(22) Anmeldetag: 23.04.2021
(51) Int. Cl.: F03D 9/46

(54) **ENERGIEUMWANDLUNGSEINHEIT, ENERGIEUMWANDLUNGSANORDNUNG, ENERGIEUMWANDLUNGSSYSTEM UND NETZWERK**
ENERGY CONVERSION UNIT, ENERGY CONVERSION ASSEMBLY, ENERGY CONVERSION SYSTEM AND NETWORK
UNITÉ DE CONVERSION D'ÉNERGIE, AGENCEMENT DE CONVERSION D'ÉNERGIE, SYSTÈME DE CONVERSION D'ÉNERGIE ET RÉSEAU

(43) Veröffentlichungstag der Anmeldung: 26.10.2022
(73) Patentinhaber: Immig, Mario, 55543 Bad Kreuznach (DE)
(72) Erfinder: Immig, Mario, Bad Kreuznach (DE)
(74) Vertreter: Metten, Karl-Heinz

(56) Entgegenhaltungen:
- CN-A- 107 100 791
- DE-A1-102018 001 424
- GB-A- 2 438 630
- JP-A- 2001 055 971
- US-A1- 2009 250 936
- US-A1- 2013 251 526
- US-A1- 2018 226 860

## Beschreibung

Gegenstand der Erfindung ist eine Energieumwandlungseinheit, eine Energieumwandlungsanordnung und ein Energieumwandlungssystem zum Umwandeln von Windenergie in elektrische Energie. Die Energieumwandlungseinheit ist dazu ausgelegt und eingerichtet, Luftströmungen infolge der Bewegung von Fahrzeugen auf einem Verkehrsweg, wie einem Fahrtwind oder eine Schubströmung, aufzufangen und daraus elektrische Energie zu erzeugen. Die Erfindung betrifft auch ein Netzwerk, dass eine Energieumwandlungseinheit, eine Energieumwandlungsanordnung und/oder ein Energieumwandlungssystem aufweist.

GB 2 465 219 A beschreibt eine Fahrtwind-Turbine, die unterhalb eines Straßenverkehrsweges angeordnet ist. Die auf dem Verkehrsweg fahrenden Fahrzeuge erzeugen Fahrtwind, der teilweise durch ein befahrbares Gitter in dem Straßenverkehrsweg geleitet wird. Unterhalb des Gitters ist in einer Kaverne eine mühlradartige Vidguet-Turbine untergebracht. In der Kaverne kann ein Leitblech vorgesehen sein, um Fahrtwind in Richtung des Drehsinns des Turbinenrades zu führen. Dennoch wirkt unausweichlich ein Teil des Fahrtwindes entgegen der Turbinen-Drehrichtung. Ein besonders gravierender Mangel der Effizienz besteht darin, dass der Großteil des Fahrtwindes oberhalb des Straßenverkehrsweges ungenutzt entweicht, sodass nur ein relativ geringer Anteil des Fahrtwindes auf die Turbine wirkt. Gleichzeitig wirkt die Kaverne als Schmutzfang, was die Betriebssicherheit der Fahrtwind-Turbine beeinträchtigt und den Wartungsaufwand erhöht. Das Gitter beeinträchtigt die ebene Oberfläche des Straßenverkehrsweges und kann eine erhebliche Gefahrenquelle beispielsweise für Zweiradfahrer darstellen.

In WO 2020/157219 A1 wird eine Fahrtwind-Turbine beschrieben, die beispielsweise zum Betreiben einer Straßenlaterne halbschalenartig um deren Mast gelegt sein kann. Die Turbinenblätter sind rings um den Mast angeordnet und erstrecken sich vertikal parallel zur Drehrichtung. Dieser Aufbau bedingt einen großen Drehwiderstand. Der Mast kann zwischen entgegengesetzten Fahrspuren des Straßenverkehrsweges angeordnet sein. Die Fahrtwinde entgegengesetzt fahrender Fahrzeuge heben sich dann allerdings gegenseitig auf. Der größte Anteil des Fahrtwindes weht an den Turbinen vorbei. Soweit der Fahrtwind auf die Turbine trifft, werden sowohl einerseits Turbinenschaufeln im Drehsinn jedoch andererseits auch Turbinenblätter entgegengesetzt zu dem Drehsinn angeströmt. Dadurch wird die Drehung der Turbine reduziert. Mit der in WO 2020/157219 A1 beschriebenen Fahrtwind-Turbine lässt sich nur eine sehr geringe Windenergieausbeute erzielen.

In EP 1 681 462 A2 wird ein Windgenerator beschrieben, der an einem Straßen- oder Schienenverkehrsweg in einem Tunnel oder an einer Brücke vor der Seiten- oder Decken-Wandfläche hängend angeordnet ist. Der Windgenerator soll mit einer Savonius-Turbine ausgestattet sein, um Fahrtwind aufzufangen und daraus elektrische Energie zu generieren. Der längliche Aufbau parallel zur Drehachse bedingt einen großen Drehwiderstand. Der größte Anteil des Fahrtwindes weht an den Turbinen vorbei. Der auf die Turbine treffende Fahrtwind wirkt zwar zum Teil im Drehsinn, andererseits jedoch auch entgegen des Drehsinns, was die Windenergieausbeute erheblich beeinträchtigt. Die Windenergieausbeute ist gering und der Wirkungsgrad ebenfalls.

US 7,427,173 B2 betrifft eine Seitenstreifen- oder Mittelstreifen-Fahrtwind-Turbine für Straßenverkehrswege, die beidseitig des Mittelstreifens in entgegengesetzter Richtung befahren werden. Entlang des Straßenverkehrswegs erstreckt sich eine Barrierewand zwischen jeweils benachbarten Fahrtwind-Turbinen, Die Turbinen erstrecken sich parallel zur Drehachse in Vertikalrichtung und haben dadurch einen relativ hohen Drehwiderstand. Die Fahrtwind-Turbinen sind von Gehäusen umgeben, die bezüglich jeder angrenzenden Fahrbahn je eine Eingangsöffnung, eine Ausgangsöffnung und eine Mittelöffnung aufweisen. Auch bei dieser Ausgestaltung weht der Großteil des Fahrtwindes an dem Rotor vorbei entlang der Außenseite der Barrierewand oder nach oben hin fort. Der relativ kleine Anteil des Fahrtwindes, der auf die Turbine trifft, wirkt sowohl im wie auch entgegen dem Drehsinn. Es ergibt sich ein sehr geringer Wirkungsgrad bezogen auf die theoretisch mögliche Windausbeute.

Die GB 2 438 630 A betrifft einen alternativen Windturbinenantrieb, der durch die Erzeugung und Ausnutzung von Luftstrom/Windkraft, der durch eine hohe Anzahl und sich schnell bewegenden Fahrzeugbewegungen ausgelöst wird, erzeugt wird, wobei der Luftstrom/Windkraft eine Rotation oder Bewegung der Turbinen auslöst. Ein solches System soll Fahrtwind in elektrische Energie umwandeln können.

Die US 2018/226860 A1 betrifft ein System zur Gewinnung von Energie aus dem Schubbetrieb eines Luftfahrzeugs, umfassend: eine Landebahnoberfläche für den Start und die Landung von Luftfahrzeugen, wobei die Landebahnoberfläche eine Tür umfasst und wobei die Tür zu einem Hohlraum geöffnet werden kann, der unter der Landebahnoberfläche angeordnet ist, eine Mehrzahl von Windturbinenblättern, die in dem Hohlraum angeordnet sind, wobei die Mehrzahl von Windturbinenblättern durch in den Hohlraum strömende Luft drehbar ist, und einen Generator, der mit der Mehrzahl von Windturbinenflügeln gekoppelt ist, so dass der Generator in Reaktion auf die Drehung der Mehrzahl von Windturbinenflügeln Elektrizität erzeugt. Ein solches soll eine Energiegewinnung in einer Flughafenumgebung ermöglichen.

Die JP 2001 055971 A betrifft einen Windkraftgenerator für Fahrbahnmarkierungen, der sich dadurch auszeichnet, dass mehrere Generatoren in einer horizontalen Reihe entlang einer Fahrtrichtung eines Fahrzeugs über ein Trägerelement angeordnet sind. Ein solcher Windkraftgenerator soll Fahrtwege voneinander trennen und den von Fahrzeugen erzeugten Fahrtwind in elektrische Energie umwandeln.

Die US 2009/250936 betrifft ein System zum Umwandeln eines Luftstroms, der Flugzeugabgase umfasst, in elektrische Leistung, umfassend: mehrere modulare Turbineneinheiten, die zu einem Cluster konfigurierbar sind, wobei der Cluster mindestens eine Reihe von mehreren benachbarten Turbineneinheiten umfasst, wobei der Cluster positionierbar ist, um den Luftstrom aufzunehmen, wobei jede der mehreren Turbineneinheiten mindestens einen Rotor umfasst und mindestens einen Generator, der mit mindestens einem der Rotoren gekoppelt ist und betreibbar ist, um Rotationsenergie der mehreren Rotoren in elektrische Leistung umzuwandeln. Ein solches System soll dazu ausgelegt sein durch Flugzeugabgase erzeugten Wind in elektrische Energie umzuwandeln.

Der vorliegenden Erfindung lag die Aufgabe zugrunde, Energieumwandlungseinheiten, Energieumwandlungsanordnungen und/oder Energieumwandlungssysteme zum Umwandeln von Windenergie in elektrische Energie sowie Netzwerke mit solchen bereitzustellen, die nicht mehr mit den Nachteilen des Stands der Technik behaftet sind. Insbesondere lag der Erfindung die Aufgabe zugrunde, Energieumwandlungseinheiten, Energieumwandlungsanordnung und/oder Energieumwandlungssystem sowie Netzwerke mit solchen bereitzustellen, die eine besonders effiziente Umwandlung von Windenergie, insbesondere ausgehend von Windströmungen infolge der Bewegung von Fahrzeugen, wie einem Fahrtwind oder einer Schubströmung, zu gewährleisten.

Demnach ist eine Energieumwandlungseinheit zum Umwandeln von Windenergie in elektrische Energie vorgesehen, die mindestens einen Rotor mit im Wesentlichen horizontaler Drehachse und eine Wand zur Anordnung neben einem Verkehrsweg für Fahrzeuge umfasst, wobei die Wand eine Aufnahme aufweist, in der der Rotor angeordnet ist. Fahrzeuge können sich auf einem Verkehrsweg in einer Fahrtrichtung bewegen. Die Bewegung von Fahrzeugen bewirkt eine Luftströmung, die hier als Fahrtwind bezeichnet ist. Ein Fahrzeug kann als Straßenfahrzeug, wie ein Personenkraftwagen, ein Lastkraftwagen oder dergleichen, zum Befahren von Straßenverkehrswegen ausgelegt sein. Alternativ oder zusätzlich kann ein Fahrzeug als Schienenfahrzeug, wie ein Zug, beispielsweise eine Magnetschwebebahn, ein Hochgeschwindigkeitszug oder ein Güterzug, zum Befahren von Schienenverkehrswregen ausgelegt sein. Gemäß einer weiteren Alternative es ist denkbar, dass es sich bei einem Fahrzeug um ein, insbesondere propellerbetriebenes oder düsenbetriebenes, Luftfahrzeug handelt, das dazu ausgelegt ist, eine Rollbahn zu befahren, beispielsweise zum Abheben und Landen.

Der Rotor umfasst mehrere sich radial zur Drehachse erstreckende Rotorblätter. Die Anzahl der Rotorblätter kann variabel sein. Beispielsweise kann eine Anzahl von 2, 3, 4, 5 oder mehr, Rotorblättern vorgesehen sein. Alternativ oder zusätzlich kann der RotorDurchmesser variabel sein, beispielsweise wie unten beschrieben. Ferner weist der Rotor eine Anströmrichtung auf, die zur Drehachse korrespondiert, insbesondere parallel zur Drehachse ist. Im Vergleich dazu wäre bei der oben beschriebenen, aus dem Stand der Technik bekannten Savonius-Turbine die Anströmrichtung senkrecht zur Drehachse. Der Fachmann versteht, dass der aerodynamische Querschnitt bzw. das Querschnittsprofil der Rotorblätter im Hinblick auf die vorbestimmte Anströmrichtung bestimmt ist.

Die Wand hat eine auf den Verkehrsweg zu richtende Seitenfläche. An der auf den Verkehrsweg zu richtenden Seitenfläche weist die Aufnahme in der Wand eine Öffnung auf. Insbesondere ist die Fläche der Öffnung im Verhältnis zu der Größe der Seitenfläche der Wand. So kann beispielsweise die Fläche der Öffnung mindestens 25 %, insbesondere mindestens 30 %, vorzugsweise mindestens 50 % der Größe der Seitenfläche der Wand bzw. des Wandabschnitts ausmachen, in dem die Aufnahme vorgesehen ist. Die Drehachse des mindestens einen Rotors ist im Wesentlichen quer zur Fahrtrichtung ausgerichtet. Insbesondere kann die Drehachse des mindestens einen Rotors orthogonal zur Fahrtrichtung ausgerichtet sein. Es kann bevorzugt sein, dass sich die Seitenfläche der Wand im Wesentlichen parallel zu dem Verkehrsweg, insbesondere der Fahrtrichtung des Verkehrsweges, erstreckt. Alternativ kann es bevorzugt sein, dass die Seitenfläche der Wand im Verhältnis zu der Fahrtrichtung in einem schrägen Winkel ausgerichtet ist. Es ist denkbar, dass die Seitenfläche der Wand im Verhältnis zur Fahrtrichtung in einem Winkel im Bereich 0° bis 90° angeordnet ist, insbesondere in einem Winkel von wenigstens 30°, vorzugsweise wenigstens 45°, besonders bevorzugt wenigstens 60°. Gemäß einer Ausführungsform kann die Seitenfläche der Wand im Verhältnis zur Fahrtrichtung in einem Winkel im Bereich 75° bis 100°, insbesondere im Bereich 80° bis 95° angeordnet sein.

Die erfindungsgemäße Energieumwandlungseinheit umfasst ferner einen Leitwerkskasten zum Führen der Luftströmung zur Öffnung, wobei der Leitwerkskasten auf der zum Verkehrsweg weisenden Seitenfläche der mindestens einen Wand angebracht ist und in Axialrichtung zur Drehachse vor der Wand steht.

Der Leitwerkskasten weist ferner eine entgegen der Fahrtrichtung gerichtete Leitwerkskastenöffnung auf.

Die erfindungsgemäße Energieumwandlungseinheit umfasst ferner mindestens eine oberhalb der Leitwerkskastenöffnung angeordnete, von der Leitwerkskastenöffnung entgegen der Fahrtrichtung vorstehende Schürze, die dazu ausgelegt und eingerichtet ist, eine Luftströmung, insbesondere in Vertikalrichtung abwärts, zur Öffnung zu führen.

Bei einer erfindungsgemäßen Energieumwandlungseinheit kann sichergestellt werden, dass die durch Fahrzeugbewegungen bewirkten Luftströmungen, insbesondere Fahrtwind, in einer Wesentlichen horizontalen Richtung empfangen wird, vorzugsweise in der zur Richtung der Drehachse des Rotors korrespondierenden Anströmrichtung. Gleichzeitig kann der nutzbare Luftströmung-Volumenstrom massiv angehoben werden.

Gemäß einer bevorzugten Ausführungsform weist die Wand eine Haupterstreckungsrichtung auf, die zu der Fahrtrichtung korrespondiert, insbesondere parallel zur Fahrtrichtung ausgerichtet ist. Alternativ oder zusätzlich kann die Haupterstreckungsrichtung quer, insbesondere orthogonal, zur Drehachse des wenigstens einen Rotors ausgerichtet sein. Die Verwendung der Wand erlaubt es, Luftströmungen, insbesondere Fahrtwind, zu sammeln und zu der Öffnung und damit zu dem Rotor zu führen, sodass die gesamte Rotorfläche mit der Luftströmung beaufschlagt wird, dass eine praktisch vollständige Flächenausbeute gewährleistet sein kann. Anders als bei herkömmlichen Ausgestaltungen verhindert die Wand, dass der Großteil der Luftströmung an der Turbine vorbei wehen kann. Der Fahrtwind muss zum Druckabbau durch den Rotor strömen und diesen dabei zum Erzeugen elektrischer Energie antreiben.

Gemäß einer bevorzugten Ausführungsform der erfindungsgemäßen Energieumwandlungseinheit ist der Leitwerkskasten entlang einer inneren Umfangskante unmittelbar angrenzend an oder in einem lediglich geringfügigen Abstand von weniger als 10 cm, insbesondere weniger als 5 cm vorzugsweise weniger als 1 cm, zu der Seitenfläche der Wand angeordnet. Mithilfe des Leitkastens werden Luftströmungen, insbesondere Fahrtwind, gefangen und in Richtung des Rotors gezwungen. Der Leitwerkskasten bewirkt eine gewisse Zwangsdurchströmung des Rotors mit den Luftströmungen, die durch die Fahrzeuge bewirkt werden. Durch das Vorsehen eines Leitwerkskastens wird vermieden, dass eine Luftströmung entlang der Innenseite der Wand in Fahrtrichtung, entgegen der Fahrtrichtung oder oben an dem Rotor vorbei strömen kann. Dadurch kann die nutzbare Menge des Fahrtwindvolumenstromes massiv angehoben werden. Mithilfe des Leitwerkskasten kann der Wirkungsgrad einer Energieumwandlungseinheit signifikant erhöht werden. Ferner kann mit dem Leitwerkskasten bewirkt werden, dass die Luftströmung beim Anströmen des Rotors in größerem Maße parallel zu der Anströmrichtung und damit mit höherer wirksamer Windgeschwindigkeit auf die Rotorblätter trifft, wodurch der Wirkungsgrad des Rotors selbst erhöht werden kann.

Bei einer Weiterbildung der erfindungsgemäßen Energieumwandlungseinheit erstreckt sich das eine oder erstrecken sich die mehreren Führungsbleche, vorzugsweise kontinuierlich, von der insbesondere einzigen Leitwerkskastenöffnung zu der Öffnung. Insbesondere ist der Leitwerkskasten gegenüber dem Verkehrsweg im Übrigen geschlossen. Insbesondere umfasst der Leitwerkskasten wenigstens ein Führungsblech zum Führen der Luftströmung von einer Leitwerkskastenöffnung zu der Öffnung, insbesondere mit einer zur Anströmrichtung korrespondierenden Luftströmungsrichtung im Bereich der Öffnung. Die innere Umfangskante kann zumindest abschnittsweise durch das Führungsblech gebildet sein. Die, beispielsweise zumindest abschnittsweise schräge, Form des Leitwerkskastens bzw. des Führungsblechs ist dazu ausgelegt und eingerichtet, eine einfallende Luftströmung in Richtung auf die Öffnung zu zu lenken. Das Führungsblech kann einstückig oder mehrteilig sein. Es ist denkbar, dass ein Leitwerkskasten mehrere, insbesondere wenigstens 4, wenigstens 8 oder wenigstens 20 Führungsbleche umfasst, um Luftströmungen näherungsweise laminar von einer Luftkastenöffnung zu der Öffnung zu führen. Das Führungsblech kann zumindest abschnittsweise, insbesondere vollflächig, schräg in Richtung auf die Öffnung zu ausgerichtet und/oder zumindest abschnittsweise, insbesondere vollflächig, in Richtung auf die Öffnung zu kontinuierlich gekrümmt sein. Der Leitwerkskasten kann mehrere Führungsbleche umfassen, wobei jeweils ein oder mehrere Führungsbleche dazu ausgelegt und eingerichtet sind, eine Luftströmung in Vertikalrichtung aufwärts, in Vertikalrichtung abwärts und/oder in Axialrichtung, vorzugsweise korrespondierend zu einer Horizontalrichtung, auf die Öffnung zu zu drängen.

Bei einer Weiterbildung der erfindungsgemäßen Energieumwandlungseinheit ist vorgesehen, dass die Schürze schräg, vorzugsweise konkav, von der Leitwerkskastenöffnung entgegen der Fahrtrichtung vorsteht. Mithilfe der Schürze kann ein Leitwerkskasten, der eine Leitwerkskastenhöhe hat, mit einer Vergrößerung des Einlaufsbereichs in Vertikalrichtung nach oben ausgestattet werden, um einen noch größeren Anteil einer Luftströmung, insbesondere des Fahrtwindes, welcher entlang der Seitenfläche der Wand strömt, durch den Leitwerkskasten zu der Öffnung zu führen. Die durch den Leitwerkskasten bedingte Zwangsdurchströmung des Rotors mit dem Fahrtwind oder anderen Luftströmungen kann mithilfe einer Schürze noch weiter verstärkt werden.

Gemäß einer Weiterbildung, die mit den vorigen kombinierbar ist, ist vorgesehen, dass der Leitwerkskasten die Öffnung zumindest teilweise umgibt, insbesondere bedeckt, wobei der Leitwerkskasten insbesondere die Drehachse überdeckt. Vorzugsweise ist in Bezug auf die Fahrtrichtung die innere Umfangskante des Leitwerkskastens zumindest abschnittsweise im Bereich der Öffnung angeordnet. Eine sich in der Fahrtrichtung bewegende Luftströmung wird so durch den Leitwerkskasten vor einem Vorbeiströmen an der Öffnung abgehalten und in die Öffnung, auf den Rotor, umgeleitet. Von dem in Fahrtrichtung hinteren Ende der Öffnung kann sich der Leitwerkskasten über einen diagonalen Abschnitt der Öffnung erstrecken. Beispielsweise kann sich der Leitwerkskasten in Diagonalenrichtung entgegen der Fahrtrichtung über zumindest einen Viertel, wenigstens ein Drittel, wenigstens die Hälfte oder wenigstens dreiviertel, insbesondere über die gesamte diagonale Länge der Öffnung, entgegen der Fahrtrichtung erstrecken.

Gemäß einer anderen Weiterbildung, die mit den vorigen kombinierbar ist, erstreckt sich der Leitwerkskasten in Vertikalrichtung wenigstens so hoch wie die Öffnung der Aufnahme. Es kann bevorzugt sein, dass die Höhe der Öffnung und die Höhe des Leitwerkskastens ausgehend von einer im Wesentlichen ebenen Bodenfläche im Wesentlichen gleichgroß sind. Es ist denkbar, dass ein Leitwerkskasten in Vertikalrichtung größer ist als die von diesem Leitwerkskasten umgebene Öffnung.

Einer Ausführungsform einer Energieumwandlungseinheit umfasst einen, insbesondere auf dem Verkehrsweg, beweglichen Tragwagen, wobei die Wand an dem Tragwagen befestigt ist. Der Tragwagen trägt die Wand einschließlich dem in der Aufnahme angeordneten Rotor, sodass eine mobile Energieumwandlungseinheit realisiert sein kann. Die mobile Energieumwandlungseinheit kann beispielsweise zum Einsatz kommen, um kurzfristig und/oder übergangsweise an besonders geeigneten Standorten positioniert zu werden. Als Tragwagen kommt beispielsweise ein Kraftfahrzeuganhänger oder ein auf Schienen beweglicher Wagon infrage.

Bei einer Ausführungsform einer Energieumwandlungseinheit ist vorgesehen, dass die eine Wand eine Höhe aufweist, die wenigstens einer Fahrzeughöhe der sich auf dem Verkehrsweg bewegenden Fahrzeuge entspricht. Dem Fachmann sind typische Fahrzeughöhe für verschiedene Verkehrswege bekannt. Für Schienenverkehrswege ist die typische Fahrzeughöhe im Allgemeinen durch die Höhe der Oberleitung begrenzt. Die sogenannte Regelfahrdrahthöhe kann im Allgemeinen zwischen 4,50 m und 6,50 m, insbesondere zwischen 5 m und 5,50 m liegen. Für Straßenfahrzeuge kann eine typische Fahrzeughöhe im Bereich von 1,50 m bis 5 m, insbesondere 1,70 m (für Pkw) und/oder 4 m (für Lkw) gelten. Für Luftfahrzeuge kann als typische Fahrzeughöhe eine Rumpf- oder Tragflächenhöhe von weniger als 25 m, insbesondere weniger als 20 m, vorzugsweise weniger als 10 m, angenommen werden. Indem die Wandhöhe wenigstens so groß wie eine Fahrzeughöhe ausgelegt ist, kann vermieden werden, dass durch die Fahrzeuge ausgelöste Luftströmungen ohne weiteres oberhalb der Wand entweichen. Auf diese Weise kann eine Zwangsdurchströmung des mindestens einen Rotors durch die von den Fahrzeugen bewirkten Luftströmungen verstärkt werden.

Gemäß einer Ausführungsform einer Energieumwandlungseinheit weist die Wand zwei einander gegenüberliegende Seitenflächen auf. Vorzugsweise sind die Seitenflächen im Wesentlichen planparallel zueinander. Die Aufnahme erstreckt sich zwischen den gegenüberliegenden Seitenflächen. Die Aufnahme weist wenigstens eine Öffnung an einer ersten Seitenfläche auf. Die Aufnahme kann eine zweite Öffnung an der zweiten Seitenfläche aufweisen. Vorzugsweise weist die Aufnahme zwei Öffnungen auf, von denen je eine an den beiden gegenüberliegenden Seitenflächen angeordnet ist. Die Aufnahme durchdringt die Wand vorzugsweise vollständig. Der Rotor ist innerhalb der Aufnahme angeordnet. Es kann bevorzugt sein, dass der Rotor sich in seiner Axialrichtung nicht über die erste und/oder zweite Seitenfläche der Wand hinaus erstreckt. Alternativ oder zusätzlich kann bei einer Ausführungsform vorgesehen sein, dass die Drehachse des Rotors quer, insbesondere orthogonal, zur Seitenfläche der mindestens einen Wand ausgerichtet ist. Auf diese Weise kann eine kompakte Bauweise erreicht werden, sodass bestehende Verkehrswege einfach um eine Energieumwandlungseinheit ergänzt werden können. Die Einhausung des Rotors in der Wand verhindert Schäden an dem Rotor und bewirkt einen Schutz vor Verschmutzungen wie auch vor Lärm.

Bei einer Ausführungsform einer Energieumwandlungseinheit weisen die Rotorblätter des Rotors eine bezüglich der Drehachse, insbesondere kontinuierlich oder stufenweise, variabel einstellbare Neigung auf. Durch die Einstellbarkeit des Neigungswinkels der Rotorblätter kann abhängig von den vorherrschenden Luftströmung-Verhältnissen der Wirkungsgrad optimal eingestellt werden.

Insbesondere können bei einer Ausführungsform der Energieumwandlungseinheit die Öffnung der Aufnahme wenigstens so groß wie der in dieser Aufnahme angeordnete Rotor sein. Insbesondere weist der Rotor einen Rotorradius von wenigstens 0,5 m auf, insbesondere wenigstens 1 m, vorzugsweise wenigstens 2 m. Alternativ oder zusätzlich kann der Rotorradius nicht mehr als 10 m, insbesondere nicht mehr als 5 m, aufweisen. Ein Rotorradius kann gemäß einer Ausführungsform beispielsweise 7,5 m betragen. Gemäß einer alternativen Ausgestaltung kann es bevorzugt sein, dass die Öffnung eine kleinere Fläche und/oder Höhe und/oder Breite aufweist als der in der dazu gehörenden Aufnahme angeordnete Rotor, beispielsweise bei einer Ausführungsform, welcher die Aufnahme sich zumindest abschnittsweise, insbesondere unterirdisch, unterhalb des Verkehrswegs angeordnet ist.

Zusätzlich oder alternativ kann bei einer Ausführungsform einer Energieumwandlungseinheit die Öffnung teilkreisförmig sein. Insbesondere kann die Öffnung viertelkreisförmig oder halbkreisförmig sein. Eine teilkreisförmige Öffnung kann insbesondere in Kombination mit einem zumindest abschnittsweise unterhalb des Verkehrsweges angeordneten Rotors bevorzugt werden.

Vorzugsweise erstreckt sich die Öffnung oberhalb des Verkehrsweges. Es kann bevorzugt sein, dass die Öffnung einen unteren Rand hat, der in etwa auf der Höhe des Verkehrsweges oder oberhalb der Oberfläche des Verkehrsweges beginnt. Durch eine derartige Anordnung der Öffnung in Bezug auf den Verkehrsweg kann sichergestellt werden, dass die Verkehrsweg-Oberfläche als zusätzliche Führungsfläche zum Bewirken Zwangsdurchströmung des Rotors agiert.

Bei einer Ausführungsform der erfindungsgemäßen Energieumwandlungseinheit umfasst die Energieumwandlungseinheit ferner mindestens ein Leitblech, das sich an einer Ober- und/oder Seitenkante entlang der Wand erstreckt und schräg, insbesondere konkav, in Richtung des Verkehrsweges von der Seitenfläche vorsteht. Insbesondere kann das Leitblech rechtwinklig in Richtung des Verkehrsweges von der Seitenfläche vorstehen. Das Leitblech erstreckt sich beispielsweise an einer Oberkante entlang der Wand weiter nach oben und/oder an einer Seitenkante entlang der Wand weiter zu der jeweiligen rechten oder linken Seite hin, über die Erstreckung der Wand hinaus. Das Leitblech kann auch als Windfangeinrichtung bezeichnet sein. Insbesondere weist das Leitblech an einer zum Verkehrsweg weisenden Kante des Leitblechs eine in Vertikalrichtung nach unten ragende Abkantung auf. Vorzugsweise erstreckt sich die Abkantung, insbesondere unterbrechungsfrei, entlang der gesamten Länge des Leitblechs. Mithilfe des in Richtung auf den Verkehrsweg zu vorstehenden Leitblechs kann ein trichterartiges Gebilde geformt sein, welches Luftströmungen, insbesondere Fahrtwind oder eine Schubströmung, zu der Öffnung führt. Mithilfe eines Leitblechs kann die Zwangsdurchströmung des Rotors gesteigert und so die Effizienz der Energieumwandlungseinheit verstärkt werden. Insbesondere lässt sich mithilfe eines Leitblech verhindern, dass eine Luftströmung ungenutzt an der Wand mit der darin vorgesehenen Öffnung und der dahinter angeordneten Rotor-Aufnahme vorbeiweht.

Die Erfindung betrifft auch eine Energieumwandlungsanordnung, welche mehrere Energieumwandlungseinheiten wie oben beschrieben umfasst, insbesondere aus mehreren Energieumwandlungseinheiten besteht. Die Wände der mehreren Energieumwandlungseinheiten bilden eine Systemwand und weisen mit einander fluchtende, insbesondere in einander übergehende, Seitenflächen auf. Vorzugsweise können die Seitenflächen benachbarter Wände (die auch als Wandabschnitte bezeichnet werden können) spaltfrei mit einander verbunden sein und in einander übergehen. Eine Energieumwandlungsanordnung kann mehrere Wände mit einer Vielzahl, insbesondere mindestens 2, wenigstens 3, wenigstens 5, wenigstens 10, wenigstens 20 oder wenigstens 100 Rotoren umfassen, wobei Rotoren dazu ausgelegt und eingerichtet sind, kinetische Windenergie in Rotationsenergie umzuwandeln, welche in elektrische Energie unwandelbar ist.

Im Verhältnis zu einer einzelnen, alleinstehenden Energieumwandlungseinheit bietet eine Energieumwandlungsanordnung den Vorteil, über einen noch größeren Bereich eine Zwangsdurchströmung der Rotoren mit Luftströmungen infolge von Bewegungen von Fahrzeugen zu bewirken, sodass die aufgegriffene Windenergie in einer Energieumwandlungsanordnung gegenüber einer entsprechenden Anzahl alleinstehender Energieumwandlungseinheiten erhöht ist.

Bei einer Weiterbildung einer Energieumwandlungsanordnung auf Basis von Energieumwandlungseinheiten mit einem jeweiligen Leitblech bilden die einzelnen Leitbleche der einzelnen Energieumwandlungseinheiten eine Leitblechstrecke, wobei die mit einander fluchtende, insbesondere in einander übergehende, auf den Verkehrsweg weisende Innenseiten aufweisen. Vorzugsweise sind die Leitbleche der Energieumwandlungseinheiten spaltfrei miteinander verbunden oder mit einem vernachlässigbar kleinen Spaltabstand relativ zueinander angeordnet, insbesondere von weniger als 10 cm, vorzugsweise weniger als 5 cm, insbesondere weniger als 1 cm.

Die Erfindung kann auch ein Energieumwandlungssystem betreffen, das mindestens eine Energieumwandlungseinheit wie oben beschrieben oder mindestens eine Energieumwandlungsanordnung wie oben beschrieben umfasst, sowie einen Verkehrsweg. Der Verkehrsweg kann beispielsweise eine Autostraße, einen Schienenweg für Schienenfahrzeuge, wie Züge, oder eine Rollbahn für Luftfahrzeuge sein. Insbesondere verläuft die Wand zumindest abschnittsweise, insbesondere parallel, benachbart zu dem Verkehrsweg. Der Abstand zwischen den Energieumwandlungseinheiten, insbesondere der Seitenfläche der Energieumwandlungseinheit, und einer Seitenkante des Verkehrsweges kann weniger als 50 m, insbesondere weniger als 10 m, vorzugweise weniger als 3 m und besonders bevorzugt weniger als 1,50 m betragen.

Bei einer Weiterbildung eines Energieumwandlungssystems, welches zwei Verkehrswege, insbesondere mit entgegengesetzter Fahrtrichtung, aufweist, kann die mindestens eine Energieumwandlungseinheit zwischen einem ersten und einem zweiten Verkehrsweg angeordnet sein. Bei einem derartigen Energieumwandlungssystem weist die Aufnahme eine erste Öffnung an der ersten Seitenfläche der Wand auf, die auf den ersten Verkehrsweg gerichtet ist. Ferner weist die Aufnahme eine zweite Öffnung auf, die auf den zweiten Verkehrsweg gerichtet ist. Alternativ kann es vorgesehen sein, dass bei einem Energieumwandlungssystem das zwischen einem ersten und einem zweiten Verkehrsweg angeordnet ist, eine Energieumwandlungsanordnung vorgesehen ist, bei der benachbarte Wandabschnitte wechselweise zu der ersten oder zweiten Seite hin geöffnete Aufnahmen aufweisen.

Bei einer anderen Ausführungsform ist die mindestens eine Energieumwandlungseinheit dazu eingerichtet und ausgelegt, eine Schubströmung eines Propeller- und/oder Düsenantriebs eines Luftfahrzeugs in der Anströmungsrichtung zu empfangen.

Die Erfindung kann auch ein Netzwerk umfassen, dass mindestens eine oben beschriebene Energieumwandlungseinheit, eine oben beschriebene Energieumwandlungsanordnung oder mindestens ein oben beschriebenes Energieumwandlungssystem umfasst. Das Netzwerk kann ferner wenigstens einen elektrischen Verbraucher aufweisen, wie eine Heizvorrichtung, insbesondere zum Beheizen des Verkehrswegs und/oder Zuwegen zur Energieumwandlungseinheit. Alternativ oder zusätzlich kann das Netzwerk wenigstens eine elektrische Ladestation für mindestens ein Fahrzeug insbesondere ein elektrisch betriebenes Fahrzeug, beispielsweise eine Elektrolokomotive oder ein elektrisch betriebenes Straßenfahrzeug, aufweisen. Das Netzwerk kann alternativ oder zusätzlich wenigstens eine Induktionsspulenanordnung zum induktiven Laden eines sich auf dem Verkehrsweg befindenden Fahrzeugs aufweisen. Alternativ oder zusätzlich umfasst das Netzwerk wenigstens einen Stromspeicher. Weiter alternativ oder zusätzlich umfasst das Netzwerk wenigstens eine Konvertervorrichtung zum Einspeisen der elektrischen Energie in ein Stromnetz, wie ein Gebäudestromnetz oder ein öffentliches Stromnetz. Alternativ oder zusätzlich kann der Verbraucher mindestens eine Beleuchtung und/oder Anzeige umfassen, beispielsweise eine Verkehrsleitanzeige, oder eine Anzeige für Information, wie Werbeinformation. Der Verbraucher kann eine dekorative Beleuchtung umfassen.

Anders als eine Windenergieanlage, die dem natürlich wehenden Wind über einen Rotor Energie entnimmt, wird mit der Energieumwandlungseinheit aus dem Fahrtwind des Fahrzeug-Verkehrs Energie zurückgewonnen. Die erfindungsgemäße Energieumwandlungseinheit kann auch als Verkehrsenergie-Rückgewinnungsanlage bezeichnet werden. Mit der Energieumwandlungseinheit wird die zum Antrieb von Fahrzeugen, wie Kraftfahrzeugen, Zügen, Luftfahrzeugen aufgebrachte Energie zu einem Großteil zurückgewonnen. So wird bislang ungenutzte Energie nutzbar gemacht. Aufgrund der großen bis sehr großen Windgeschwindigkeiten durch Luftströmungen, welche durch die Bewegung von Fahrzeugen bedingt werden, kann die Energieumwandlungseinheit mit einer sehr hohen Effizienz betrieben werden. Gleichzeitig bietet die Möglichkeit der Einbindung in die sich in Industrienationen über große Strecken erstreckenden Netze von Verkehrswegen, also Straßennetzen, Bahnlinien und Rollbahnen, etc., vielfältige Möglichkeiten zur Verwendung von Energieumwandlungseinheiten. Besonders im Hinblick auf die Verwendung von Fahrzeugen mit elektrischem Antrieb, wie sie im Schienenverkehr allgegenwärtig sind und im Straßenverkehr eine zunehmend größere Bedeutung gewinnen, bietet die Energieumwandlungseinheit die Möglichkeit zur Schaffung eines geschlossenen, emissionsfreien Energiekreislaufs. Elektrische Energie, die zum Antreiben eines Fahrzeuges genutzt wird, kann mittels der Energieumwandlungseinheit zu einem großen Teil wieder zurückgewonnen werden. Mithilfe einer Energieumwandlungseinheit, Energieumwandlungsanordnung oder eines Energieumwandlungssystems kann eine elektrische Selbstversorgung eines Verbrauchers, wie eines Bahnhofs, eines Flughafens, einer Tankstelle, einer Industrieanlage, eines Krankenhauses, oder mehrerer Wohnhäuser, gewährleistet werden. Dadurch kann auch die Verlegung von langen Hochspannungsleitungen von einem abgelegenen Anlagenstandort zu den Verbrauchern vermieden werden. Die Akzeptanz eine Energieumwandlungseinheit, die im Bereich ohnehin vorhandenen Verkehrswege anzuordnen ist, ist erwartbar um ein Vielfaches größer als für konventionelle Windenergieanlagen gleicher Leistung, da ein Eingriff in Wälder und Felder unterbleiben kann. Da der Verkehrslärm an den Verkehrswegen deutlich überwiegt, und die Energieumwandlungseinheit sogar eine Lärmreduktion bewirken kann, kann ein Schallschutzabstand entfallen. Gleichzeitig sind erforderlicher Investitionsaufwand wie auch technisches Knom,-hom, aufgrund der einfachen Umsetzbarkeit der Energieumwandlungseinheit wesentlich geringer als für konventionelle Windenergieanlagen. Durch die Verwendung bewährter Technologie kann eine lange Lebensdauer und ein verhältnismäßig geringer Wartungsaufwand gewährleistet werden. Anders als Windenergieanlagen ist die Energieumwandlungseinheit unabhängig von einer vorherrschenden Windrichtung und bedarf bei wechselnder Windrichtung keiner Anpassung, da sich eine optimale konstruktive Anpassung an die Gegebenheiten des zu der Energieumwandlungseinheit angrenzenden Verkehrsweges gewährleisten lässt.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert werden, ohne dadurch die Erfindung zu beschränken. Dabei zeigen
- Figur 1: eine schematische Seitenansicht einer erfindungsgemäßen Energieumwandlungseinheit;
- Figur 2: eine schematische Seitenansicht einer anderen erfindungsgemäßen Energieumwandlungseinheit;
- Figur 3: eine schematische Draufsicht auf einen mehrspurigen Straßenverkehrsweg, der an beiden Seiten mit je einer Energieumwandlungseinheit ausgestattet ist;
- Figur 4: eine schematische Draufsicht auf einen mehrspurigen Schienenverkehrsweg, bei dem zwischen den Spuren eine Energieumwandlungseinheit angeordnet ist;
- Figur 5a: eine schematische Seitenansicht einer Energieumwandlungseinheit gemäß Figur 1 oder 2;
- Figur 5b: eine Draufsicht auf die Energieumwandlungseinheit nach Figur 5a;
- Figur 6a: eine schematische Seitenansicht auf eine offene Energieumwandlungseinheit;
- Figur 6b: eine Draufsicht auf die offene Energieumwandlungseinheit nach Figur 6a;
- Figur 7: eine schematische Draufsicht auf eine winkelverstellbare Energieumwandlungseinheit;
- Figur 8: eine schematische Seitenansicht einer weiteren Energieumwandlungseinheit;
- Figur 9: eine schematische Seitenansicht noch einer weiteren Energieumwandlungseinheit;
- Figur 10: eine perspektivische Ansicht einer Energieumwandlungsanordnung mit drei Energieumwandlungseinheiten gemäß Figur 9;
- Figur 11: eine Detaildarstellung eines Leitwerkskastens;
- Figur 12: eine Ausführungsform einer Energieumwandlungseinheit mit einem Tragwagen;
- Figur 13: eine schematische Darstellung eines Netzwerks mit einer Energieumwandlungseinheit;
- Figur 14: eine Draufsicht auf eine Energieumwandlungseinheit mit einem Generator; und
- Figur 15: eine schematische Schnittdarstellung durch ein Energieumwandlungssystem mit Heizvorrichtung.

Zur Vereinfachung der Lesbarkeit werden in der nachfolgenden Beschreibung bevorzugter Ausführungsformen der Erfindung für dieselben oder ähnliche Komponenten verschiedenen Ausführungsformen dieselben oder ähnliche Bezugszeichen verwendet.

Eine erfindungsgemäße Energieumwandlungseinheit ist nachfolgend im Allgemeinen mit dem Bezugszeichen 1 versehen. Die Energieumwandlungseinheit 1 umfasst eine Wand 3 mit einem daran gelagerten Rotor 5.

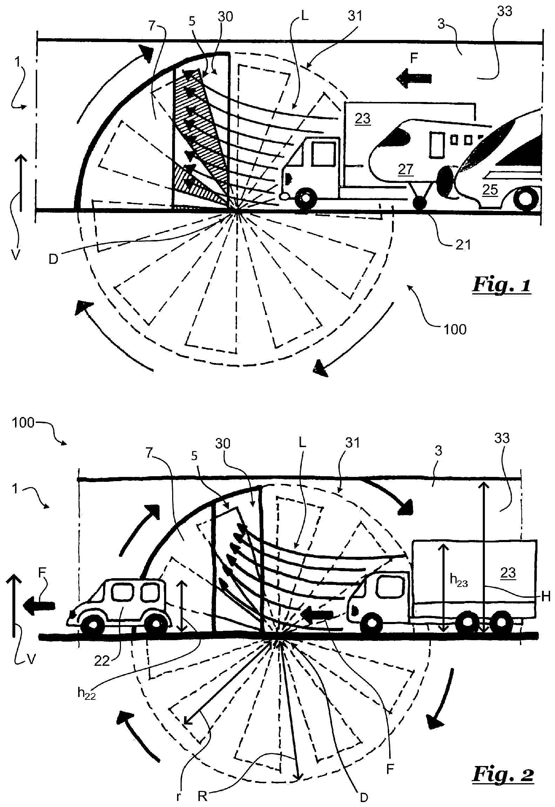

Figur 1 zeigt die Energieumwandlungseinheit 1 benachbart zu einem Verkehrsweg 21 für Fahrzeuge, die hier exemplarisch als ein LKW 23, ein Zug 25 und ein Flugzeug 27 dargestellt sind. Die Bewegung der Fahrzeuge 23, 25, 27 in Fahrtrichtung F verursacht eine Luftströmung L, die als Fahrtwind bezeichnet wird. Die Luftströmung L wirkt auf den Rotor 5 und bringt diesen zum Rotieren um seine Drehachse D. Der Rotor 5 treibt einen Stromerzeuger (nicht näher dargestellt) an, um die kinetische Wind- bzw. Rotationsenergie in elektrische Energie umzuwandeln.

Der Rotor 5 ist in einer Aufnahme 31 in der Wand 3 um die Rotorachse D drehbar gelagert. Die Wand 3 hat eine auf den Verkehrsweg 21 gerichtete Seitenfläche 33 mit einer zur Aufnahme 31 offenen Öffnung 30. Die Luftströmung L weht durch die Öffnung 30 und treibt den Rotor 5 an.

Figur 2 zeigt eine Energieumwandlungseinheit 1, die der schematischen Energieumwandlungseinheit 1 gemäß Figur 1 im Wesentlichen entspricht. Bei der in Figur 2 dargestellten Ausführungsform ist ein Verkehrsweg 21 in Form einer Straße dargestellt, die von Straßenfahrzeugen, wie PKW 22 und LKW 23, befahrbar ist. Die Energieumwandlungseinheit 1 kann mit dem Verkehrsweg 21 ein Energieumwandlungssystem 100 bilden. Die Wandhöhe H der Seitenfläche 33 ist größer als eine PKW-Höhe h₂₂ bzw. eine LKW Höhe h₂₃. Der Straßenverkehrsweg 21 kann beispielsweise eine Autobahn sein, die zum Befahren durch LKW 23 ausgelegt und eingerichtet ist, die eine typische LKW-Höhe h₂₃ von etwa 4 m haben.

Die Seitenfläche 33 hat eine Höhe H, die größer ist als die Höhe der Fahrzeuge, die sich typischerweise auf dem Verkehrsweg 21 bewegen. Die Wand 3 dehnt sich in der Fahrtrichtung F entlang dem Verkehrsweg 21 aus. Durch die Fahrzeuge 22, 23 bewirkte Luftströmungen L werden durch die lange, hohe Wand 3 zurückgehalten und strömen entlang der Seitenfläche 33. Vor der Seitenfläche 33 ist ein Leitwerkskasten 7 an der Wand angeordnet. Entlang der Seitenfläche 33 strömende Luftströmungen L werden durch den Leitwerkskasten 7 zu der Öffnung 30 geführt. Die Öffnung 30 ist viertelkreisförmig und erstreckt sich ausgehend von der Drehachse D in Vertikalrichtung V nach oben und in Fahrtrichtung F. Der Leitwerkskasten 7 bedeckt die Öffnung 30 zum Teil.

Der Rotor 5 ist in einer Aufnahme 31 in der Wand 3 um eine Drehachse D drehbar gelagert. Der Rotor 5 hat eine Anströmrichtung, die parallel zur Drehachse D orientiert ist. In Richtung der Anströmrichtung auf den Rotor 5 treffende Luftströmungen können diesen optimal antreiben. In der in Figur 2 dargestellten Ausführungsform hat der Rotor 5 einen Rotorradius r, der nahezu der Höhe H der Wand entspricht. Die Aufnahme 31 hat eine zylindrische Form mit einem Innenradius R, der im Wesentlichen der Höhe H der Wand 3 entspricht. Der Rotorradius r ist geringfügig kleiner als der Innenradius R der Aufnahme. Der Rotorradius r kann vorzugsweise wenigstens 90%, insbesondere wenigstens 95% des Innenradius R betragen, sodass praktisch keine Luft ungenutzt an dem Rotor 5 vorbei strömen kann. Die Drehachse D ist in etwa auf derselben horizontalen Ebene wie die Fahrfläche des Verkehrsweges 21 angeordnet. Ein Teil der Aufnahme 31 mit darin angeordnetem Rotor 5 ist in Vertikalrichtung V unterhalb der Fahrfläche des Verkehrsweges 21 angeordnet.

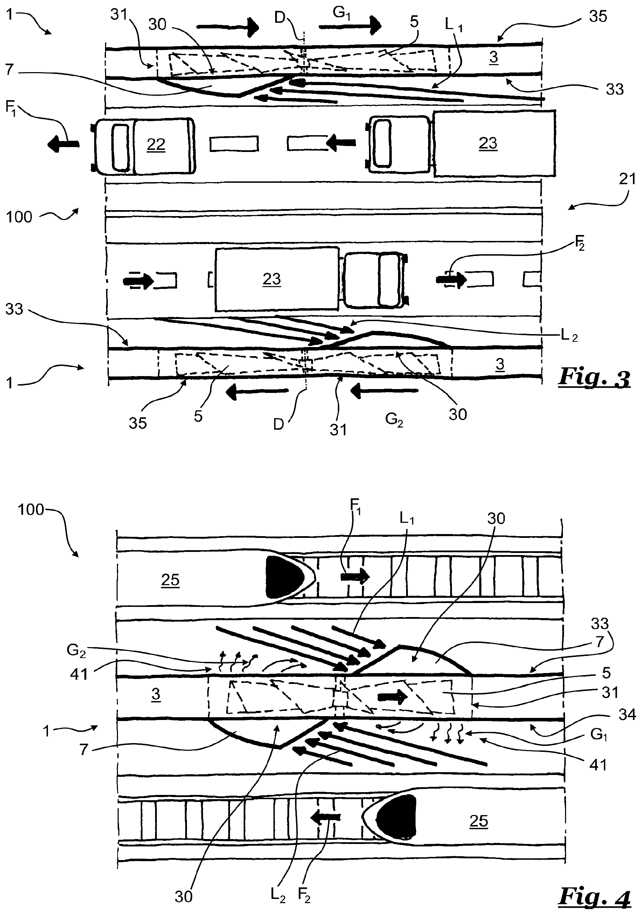

Figur 3 zeigt eine Draufsicht auf einen mehrspurigen Straßenverkehrsweg 21 mit zwei Fahrspuren mit entgegengesetzten Fahrtrichtungen F₁, F₂ von Straßenfahrzeugen 22, 23 befahren werden. Der Straßenverkehrsweg 21 ist beidseitig von je einer Energieumwandlungseinheit 1 umgeben. Die Energieumwandlungseinheiten 1 und der Straßenverkehrsweg 21 können als Energieumwandlungssystem 100 betrachtet werden. Die Fahrzeuge 22, 23, die sich in der ersten Fahrtrichtung F₁ bewegen, erzeugen eine erste Fahrtwind-Luftströmung L₁. Die Fahrzeuge 23, die sich in der zweiten Fahrtrichtung F₂ bewegen, erzeugen eine zweite Fahrtwind-Luftströmung L₂. Der Verkehrsweg 21 ist beidseitig durch Energieumwandlungseinheiten 1 eingerahmt. Der durch die Energieumwandlungseinheit 1 ausgenutzte Fahrtwind verbleibt nicht auf der Fahrbahn. Er wird zur Rückseite 35 hin abgeführt, sodass Dissipationserscheinungen auf dem Verkehrsweg 21 vermieden werden. Die Energieumwandlungseinheiten 1 können wie oben in Bezug auf Figur 2 beschrieben ausgelegt sein und wirken. Die jeweilige Aufnahme 31 erstreckt sich quer zu der Wand von der ersten Seitenfläche 33, die auf den Verkehrsweg 21 gerichtet ist, bis zu einer Rückseitenfläche 35. Der Rotor 5 ist vollständig innerhalb der Aufnahme 31 und somit innerhalb der Wand 3 untergebracht. Die Drehachse D des Rotors 5 kann, wie in Figur 2 erkennbar, quer, insbesondere orthogonal, zu der Fahrtrichtung F angeordnet sein. Die Wand 3 hat in Querrichtung eine im Verhältnis zur Länge und Höhe H geringe Breite B. Die Rotorbreite b ist kleiner als die Wandbreite B.

Figur 4 zeigt eine andere Ausführung eines mehrspurigen Verkehrsweges 21, der hier als Schienenverkehrsweg dargestellt ist, zwischen dessen Fahrspuren eine Energieumwandlungseinheit 1 angeordnet ist. Es sei klar, dass alternativ ein anderer Verkehrsweg, wie ein Straßenverkehrsweg, beidseitig der mittig zwischen den Fahrspuren angeordneten Energieumwandlungseinheit 1 vorgesehen sein kann. Wie in der Figur 4 abgebildet, kann es bevorzugt sein, dass ein Energieumwandlungssystem 100 dahingehend ausgestaltet, dass die Energieumwandlungseinheit 1 zwischen Fahrspuren eines Verkehrsweges 21 mit entgegengesetzten Fahrtrichtungen F₁, F₂ angeordnet ist. Eine solche Energieumwandlungseinheit kann derart konfiguriert sein, dass die Aufnahme 31 Öffnungen 30 an beiden einander gegenüberliegenden Seitenflächen 33, 34 hat. Die sich in der jeweiligen Fahrtrichtung F₁ oder F₂ bewegenden Fahrzeuge, hier Hochgeschwindigkeitszüge 25, bewirken eine jeweilige Fahrtwind-Luftströmung L₁, L₂. Geführt durch die erste oder zweite Seitenfläche 33 bzw. 34 und je den jeweiligen daran angeordneten Leitwerkskasten 7 wird die Luftströmung L₁, L₂ zu dem Rotor 5 geführt. Nach dem Durchströmen des Rotors 5 kann eine Rest-Luftströmung G₁, G₂ durch Spalt- oder Gitter-Öffnungen in einem Unterdruckbereich 41 austreten. Im Unterdruckbereich 41 wird die ausströmende Rest-Luftströmung G₁ oder G₂ des ersten oder zweiten Luftstroms L₁ oder L₂ von der dort wirkenden jeweils anderen, zweiten oder ersten Luftströmung L₂ oder L₁ mitgerissen und wieder in den Leitwerkskasten 7 gedrängt. Auf diese Weise kann der Wirkungsgrad des Energieumwandlungssystems 100 optimiert werden.

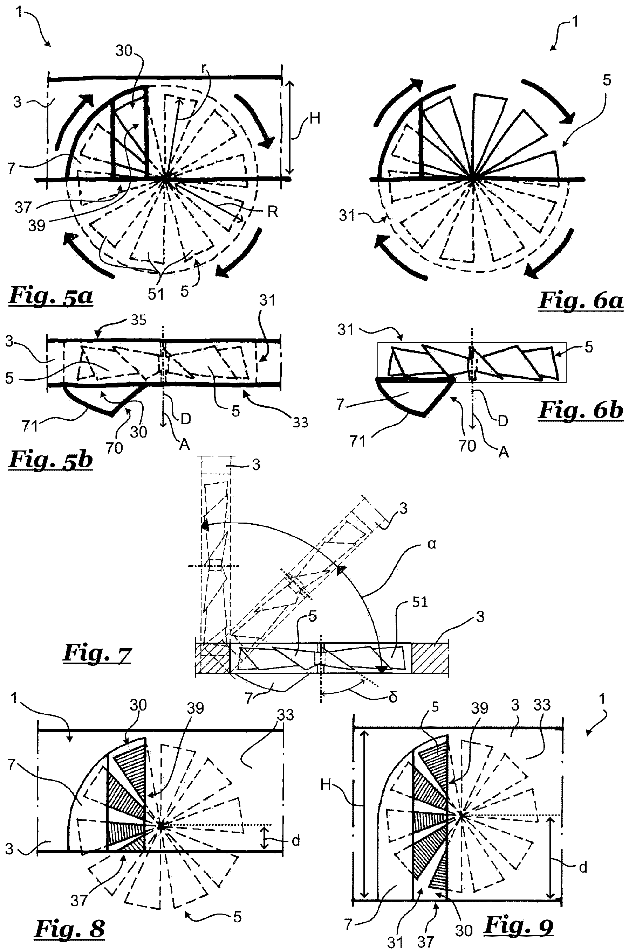

Die Figuren 5a und 5b zeigen eine Ausführungsform einer Energieumwandlungseinheit 1, die bei einer der vorgenannten Ausführungsformen gemäß der oben beschriebenen Figuren 1 bis 4 zum Einsatz kommen kann. Der Rotor 5 hat zehn Rotorblätter 51, die um die gemeinsame Drehachse D rotieren. Die Drehachse D ist horizontal ausgerichtet. Die Drehachse D liegt im Wesentlichen auf einer horizontalen Ebene des Bodens, die beispielsweise mit einer Fahrfläche eines Verkehrsweges korrespondieren kann. Der Rotor 5 ist in einer Aufnahme 31 im Inneren der Wand 3 untergebracht. Die Wand 3 wird von einer ersten Seitenfläche 33 begrenzt, die auf einen Verkehrsweg auszurichten ist, Beispielsweise parallel dazu. Auf der zu der ersten Seitenfläche 33 entgegengesetzten Seite ist die Wand 3 durch eine Rückseitenfläche 35 begrenzt. Die Rotorbreite b des Rotors 5 ist kleiner als die Breite B der Wand 3. An der Rückseite 35 der Wand können Spalt- oder Gitter-Öffnungen vorgesehen sein, sodass eine Luftströmung, die zum Antreiben des Rotors 5 gedient hat, die Aufnahme 31 als Rest-Luftströmung verlassen kann.

Die Seitenfläche 33 ist durch eine Öffnung 30 durchbrochen, durch welche die Luftströmung in das Innere der Aufnahme 31 und zu dem dort angeordneten Rotor 5 strömen kann. Bei den Ausführungen gemäß Figur 5a ist diese Öffnung 30 teilkreisförmig und erstreckt sich entlang des rundlichen Umfangs der Aufnahme 31 um etwa 80°. Die Öffnung 30 ist an ihrem in Vertikalrichtung V unteren Ende durch eine horizontale Unterkante 37 begrenzt. Eine Seitenkante 39, die sich ausgehend von der Bodenfläche B parallel zur Vertikalrichtung V erstreckt, begrenzt die andere Seite der Öffnung 30. Die Höhe H der Seitenfläche 33 beziehungsweise der Wand 3 liegt im Bereich zwischen 120 % und 150 % des Rotorradius r.

An der Seitenfläche 33 steht ein Leitwerkskasten 7 hervor in eine Richtung, die zu der Axialrichtung A der Drehachse D korrespondiert. Der Leitwerkskasten 7 hat eine Leitwerkskastenöffnung 70. Eine Luftströmung tritt in den Leitwerkskasten 7 durch die Leitwerkskastenöffnung 70 ein und wird durch den Leitkasten 7 zu der Öffnung 30 hin geführt. Der Leitwerkskasten erstreckt sich entlang der Umfangskante der Öffnung 30 und steht dort mit der Wand 3 in engem Kontakt. Der Leitwerkskasten 7 ist in der hier abgebildeten einfachen Ausführungsform durch ein einfaches Führungsblech 71 gebildet.

Die Figuren 6a und 6b zeigen eine alternative Ausführungsform einer Energieumwandlungseinheit 1. Der Rotor 5 ist wie bei der zuvor beschriebenen Energieumwandlungseinheit 1 gemäß der Figuren 5a und 5b gestaltet. Eine oberhalb der Bodenfläche B angeordnete Seitenfläche ist nicht vorgesehen. Die Aufnahme 31 (und insofern die Wand) ist bei der Ausführungsform gemäß der Figuren 6a und 6b unterirdisch, unterhalb der Bodenfläche B gebildet. Oberhalb der Bodenfläche B ist ein aus einem Führungsblech 71 bestehender Leitwerkskasten 7 vorgesehen. Der Leitwerkskasten kann Luftströmung, die quer zur Drehachse D und der dazu korrespondierenden Anströmungsrichtung des Rotors 5 wehen, umleiten und zu dem Rotor 5 hinführen.

Figur 7 zeigt schematisch eine Energieumwandlungseinheit 1, die wahlweise mit oder ohne Leitwerkskasten 7 ausgestaltet sein kann, die in verschiedenen Anstellwinkeln insbesondere in Bezug auf einen Verkehrsweg angeordnet sein kann. Wie hier schematisch dargestellt, kann die Energieumwandlungseinheit 1 parallel zu einem Verkehrsweg ausgerichtet sein, sodass die Drehachse D in Horizontalrichtung und senkrecht bezüglich der Fahrtrichtung angeordnet ist, in diesem Fall kann von einem 0° Anstellwinkel die Rede sein. Es ist denkbar, dass die Energieumwandlungseinheit 1, d. h. die Wand 3 mit dem darin angeordneten Rotor 5, um einen beliebigen Anstellwinkel α verstellbar ist. Der Anstellwinkel α kann beispielsweise im Bereich 30° bis 45° liegen.

Am Beispiel der Ausführung von Figur 7 sei außerdem erwähnt, dass die Rotorblätter 51 des Rotors 5 variabel gestaltet sind. Zum einen kann die Anzahl der Rotorblätter 51 variabel hinsichtlich der zu erwartenden Luftströmung am Einsatzort einer Energieumwandlungseinheit 1 gewählt werden. Ferner kann die Größe, d. h. der Rotorradius r und/oder die Rotorbreite b im Hinblick auf die zu erwartenden Strömungsverhältnisse optimal gewählt werden. Ferner kann der Neigungswinkel 8 der Rotorblätter 51 bezüglich der Drehachse D variabel einstellbar sein. Vorzugsweise kann der Neigungswinkel 8 im Bereich von 5° bis 85°, insbesondere im Bereich von 10° bis 80°, vorzugsweise im Bereich 30° bis 60° einstellbar sein. Der Neigungswinkel δ kann konstruktiv konstant eingestellt sein. Es ist denkbar, dass der Rotor 5 eine Stellvorrichtung umfasst, die dazu ausgelegt und eingerichtet ist um den Neigungswinkel δ der Rotorblätter 51 bezüglich der Drehachse D in Bezug auf aktuell am Einsatzort der Energieumwandlungseinheit 1 vorherrschende Strömungsbedingungen optimal einstellen kann.

Figur 8 zeigt eine weitere Ausführungsform einer Energieumwandlungseinheit ähnlich der zuvor bezüglich der Figuren 5a und 5b beschriebenen. Abweichend von den zuvor beschriebenen Energieumwandlungseinheiten ist die Drehachse D des Rotors 5 in einem Abstand oberhalb der Bodenfläche B angeordnet. Drehachse D erstreckt sich in Horizontalrichtung. Die Unterkante 37 und die Seitenkante 39 der Öffnung 30 in der Seitenfläche 33 der Wand 3 sind sehr ähnlich der bezüglich Figur 5a beschriebenen Öffnung 30 gestaltet, mit dem Unterschied, dass die bogenförmige Kante und die Seitenkante 39 in Vertikalrichtung V nach unten verlängert sind und sich unterhalb der Drehachse D bis zu der Bodenfläche B erstrecken. Die Distanz d der Drehachse D zur Bodenfläche B ist kleiner als der Rotorradius r. Bei der in Figur 7 ausgestalteten Ausführung ist die Distanz d kleiner als die Hälfte des Rotorradius r.

Figur 9 zeigt noch eine Ausführungsform einer Energieumwandlungseinheit, die im Wesentlichen der Ausführungsform gemäß Figur 8 entspricht. Jedoch ist die Distanz d zwischen der Drehachse D und der Bodenfläche B größer als der Rotorradius r. Die Aufnahme 31 und der darin befindliche Rotor 5 sind vollständig oberhalb der Bodenfläche B angeordnet. Die Distanz d der Drehachse D zur Bodenfläche B entspricht im Wesentlichen dem Innenradius R der Aufnahme 31. Die Höhe H der Seitenfläche 33 beziehungsweise der Wand 3 liegt im Bereich zwischen 220 % und 250 % des Rotorradius r.

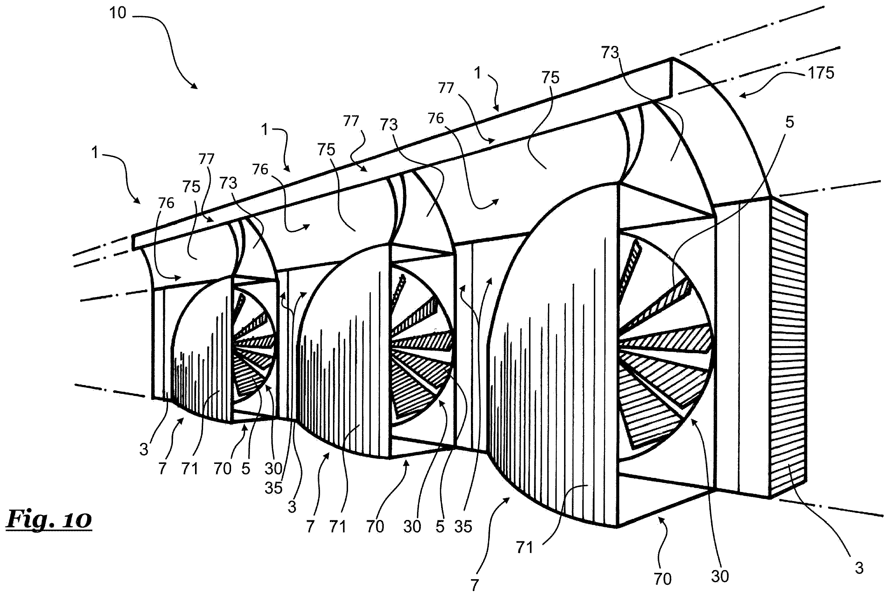

Figur 10 zeigt eine Energieumwandlungsanordnung 10 aus mehreren Energieumwandlungseinheiten 1 ähnlich der in Figur 9 dargestellten Energieumwandlungseinheit. Die Energiewandlungseinheiten 1 sind baugleich. Die Seitenflächen 35 der Wandabschnitte 3 gehen planparallel ineinander über.

Am oberen Rand jedes Wandabschnitts 3 ist je ein Leitblech 75 angeordnet. Es sei angemerkt, dass die Leitbleche (wie auch die vorgenannten Führungsbleche) nicht aus einem Metallmaterial bestehen brauchen. Das Leitblech 75 steht von der Seitenfläche 35 in Richtung zu dem Verkehrsweg 21 vor. Das Leitblech 75 kann im Allgemeinen schräg sein, also in seiner Erstreckung bezüglich der Wand 3 eine Vertikalkomponente und eine horizontale Komponente aufweisen. Insbesondere ist das Leitblech 75 gewölbt und weist, wie in Figur 10 abgebildet, in Bezug auf die ebene Seitenfläche 33 eine konkave Krümmung auf. An der zum Verkehrsweg 21 weisenden Längskante des Leitblechs 75 ist eine in Vertikalrichtung V nach unten ragende Abkantung 77 vorgesehen.

Vor jeder Öffnung 30 der Energieumwandlungseinheiten 1 ist je ein Leitwerkskasten 7 vorgesehen. Der Leitwerkskasten erstreckt sich in der Fahrtrichtung über die gesamte diagonale Breite der Öffnung 30. Die Öffnung 30 ist bei der hier abgebildeten Ausführungsform kreisförmig und korrespondiert zu dem Innenradius R der Aufnahme 31.

Der Leitwerkskasten 7 ist durch ein konkav entgegen der Fahrtrichtung gekrümmtes Führungsblech 71 gebildet. Das Führungsblech 71 erstreckt sich in der Vertikalrichtung V im Wesentlichen über die gesamte Höhe der Öffnung 30 und überdeckt die Drehachse D in deren Axialrichtung A. Das Führungsblech 71 erstreckt sich in Vertikalrichtung von der Bodenfläche B, auf welche die Wand 3 aufsteht, bis zur Oberkante der Öffnung 30.

Um Luftströmungen, die entlang dem Leitblech 75 strömen, zu der Öffnung 30 zu drängen, ist oberhalb des Führungsblechs 71 eine Schürze 73 vorgesehen, die sich flächig zwischen der Innenseite 76 des Leitblechs 75 und der Oberkante des Leitwerkskastens 7 erstreckt. Die Schürze 73 ist zumindest abschnittsweise entgegen der Fahrtrichtung geschwenkt oder gekrümmt, um eine aerodynamisch vorteilhafte Führung der Luftströmung von dem Leitblech 75 in den Leitwerkskasten 7 zu bewirken. Die Seitenflächen 35 und die Leitbleche 75 benachbarter Wandabschnitte 3 sind planparallel zueinander fluchtend und spaltfrei in einander übergehend gebildet. Die Energieumwandlungsanordnung 10 stellt durch die Zusammenwirkung der Leitbleche 75, der Schürzen 73, sowie der Leitwerkskasten 7 und Seitenflächen 35 einen großflächigen Bereich zum Fangen und Führen von beispielsweise Fahrtwind- Luftströmungen L zu dem Rotor 5 bereit.

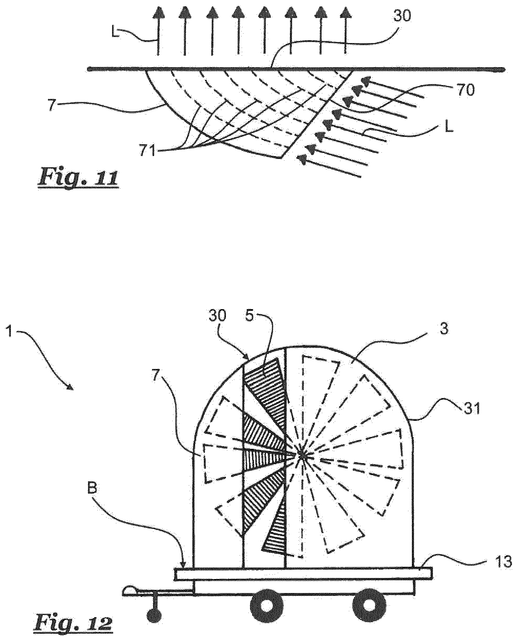

Figur 11 zeigt ein Beispiel für einen Leitwerkskasten 7 mit einer Vielzahl von Führungsblechen 71. Die Führungsbleche 71 bilden im Wesentlichen parallele Strömungskanäle für die Luftströmung L von der Leitwerkskastenöffnung 70 zur Öffnung 30, sodass eine Öffnung 30 der Aufnahme 31 einer Ausrichtung der Luftströmung L korrespondierend zu der Anströmrichtung des (nicht näher dargestellten) Rotors bewirkt wird. Die Anzahl der Führungsbleche 71 in einem Leitwerkskasten 7 kann beispielsweise zwischen 2 und 100, insbesondere zwischen 5 und 20 liegen.

Figur 12 zeigt eine Energieumwandlungseinheit 1, bei der die Wand 3 durch eine Einschalung beispielsweise aus Blech gebildet ist, die eine Öffnung 30 und einen vor der Öffnung 30 angeordnete Leitwerkskasten 7 hat. Die Energieumwandlungseinheit 1 umfasst ferner einen Anhänger 13 mit Rollreifen, der als Tragwagen ausgelegt und eingerichtet ist, um die Energieumwandlungseinheit 1 mobil und transportfähig auszugestalten. Der Anhänger 13 kann beispielsweise an die Anhängerkupplung eines LKW angehängt werden, um zu einem Einsatzort gebracht zu werden. Die Wand 3 mit der darin gebildeten Aufnahme 31 und dem in der Aufnahme gehaltenen Rotor 5 ist auf der Tragfläche des Anhängers 13 befestigt, die die Bodenfläche B bildet. Die Öffnung 30 ist teilkreisförmig und/oder eckig und erstreckt sich an einer Seite der Drehachse von der Bodenfläche bis zur Oberkante der Wand 3.

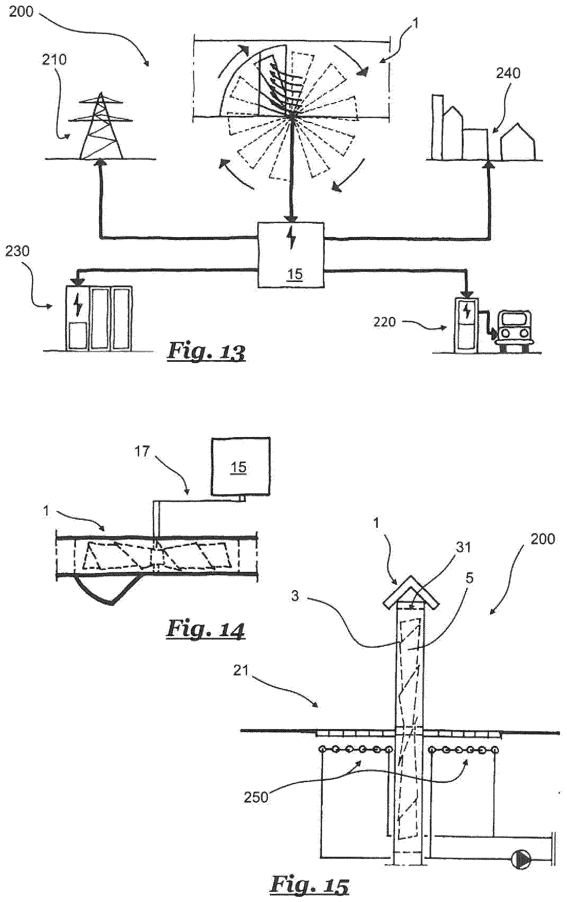

In Figur 13 ist ein Netzwerk 200 abgebildet, dass eine Energieumwandlungseinheit 1 aufweist. Die Energieumwandlungseinheit 1 kann beispielsweise wie oben bezüglich Figur 5a beschrieben ausgeführt sein. Es sei klar, dass das Netzwerk 200 optional eine Vielzahl von Energieumwandlungseinheiten 1 aufweisen kann. Die Energieumwandlungseinheit 1 ist mit einem Stromerzeuger verbunden. Ein Stromerzeuger kann beispielsweise ein Generator 15 sein, der unmittelbar an der Welle, die den Rotor 5 trägt, befestigt ist. Wie in der schematischen Draufsicht gemäß Figur 14 dargestellt, ist es alternativ denkbar, dass die Abtriebswelle des Rotors 5 über Übertragung- und/oder Übersetzungsmittel 17, wie eine Kette, einen Riemen, ein Zahnrad oder dergleichen, mit der Antriebswelle des Stromgenerators 15 verbunden ist. Aus dem Stromgenerator 15 kann die mit der Energieumwandlungseinheit 1 gewonnene elektrische Energie in das öffentliche Stromnetz 210 eingespeist werden. Alternativ oder zusätzlich ist es denkbar, dass der Stromgenerator 15 mit einem Energiespeicher, wie einer Batterie 230 verbunden ist, um die mit der Energieumwandlungseinheit 1 gewonnene elektrische Energie zu speichern. Ferner ist es denkbar, dass der Stromerzeuger an eine Ladestation 220 für ein Fahrzeug, Beispielsweise ein Straßenfahrzeug, wie ein Pkw 22, angeschlossen ist. Alternativ oder zusätzlich kann der Stromgenerator 15 verbunden sein mit einem Netzwerk eines Gebäudes oder Gebäudekomplexes 240, wie einem Flughafen, einem Krankenhaus, einer Tankstelle, einem oder mehreren Wohnhäusern, oder dergleichen, um dies mit elektrischer Energie zu versorgen.

Figur 15 zeigt eine alternative Ausgestaltung eines Netzwerks 200, bei welcher die Energieumwandlungseinheit 1, die beispielsweise entsprechend der oben bezüglich Figur 3 beschriebenen Ausführungsform realisiert sein kann, verbunden ist mit einem Verbraucher in Form einer Heizvorrichtung 250 zum frostfrei Halten des Verkehrsweges 21 und/oder mindestens einem Zuweg der Energieumwandlungseinheit 1. Alternativ oder zusätzlich kann eine Energieumwandlungseinheit 1 oder eine Energieumwandlungsanordnung in einem Netzwerk 200 verbunden sein mit Induktionsspulen in einem Verkehrsweg 21 zum Aufladen von elektrisch betriebenen Fahrzeugen, die auf dem Verkehrsweg 21 fahren, um diese während der Fahrt mit elektrischer Energie zu versorgen.

Die in der voranstehenden Beschreibung, den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein. Der Schutzumfang ist in den beigefügten Ansprüchen definiert.

## Patentansprüche

1. Energieumwandlungseinheit (1) zum Umwandeln von Windenergie in elektrische Energie, umfassend:
- mindestens einen Rotor (5) mit im Wesentlichen horizontaler Drehachse (D), umfassend mehrere sich radial zur Drehachse (D) erstreckende Rotorblätter (51), wobei der Rotor (5) eine Anströmrichtung aufweist, die zur Drehachse (D) korrespondiert, insbesondere parallel zur Drehachse (D) ist,
- eine Wand (3) zur Anordnung neben einem Verkehrsweg (21) für Fahrzeuge (22, 23, 25, 27), die sich auf dem Verkehrsweg (21) in einer Fahrtrichtung (F) bewegen können und deren Bewegung eine Luftströmung (L) bewirkt, wobei die Wand (3) eine Aufnahme (31) aufweist, in der der Rotor (5) angeordnet ist, wobei die Aufnahme (31) eine Öffnung (30) an einer auf den Verkehrsweg (21) zu richtenden Seitenfläche der Wand (3) aufweist, und wobei die Drehachse (D) des mindestens einen Rotors (5) im Wesentlichen quer zur Fahrtrichtung (F) ausgerichtet ist,
- einen Leitwerkskasten (7) zum Führen der Luftströmung (L) zur Öffnung (30),
wobei der Leitwerkskasten (7) der auf der zum Verkehrsweg (21) weisenden Seitenfläche (33) der mindestens einen Wand (3) angebracht ist und in Axialrichtung zur Drehachse (D) vor der Wand (3) steht,
wobei der Leitwerkskasten (7) eine entgegen der Fahrtrichtung (F) gerichtete Leitwerkskastenöffnung (70) umfasst, und
- mindestens eine oberhalb der Leitwerkskastenöffnung (70) angeordnete, von der Leitwerkskastenöffnung (70) entgegen der Fahrtrichtung (F) vorstehende Schürze (73), die dazu ausgelegt und eingerichtet ist, die Luftströmung (L) zur Öffnung (30) zu führen.

2. Energieumwandlungseinheit (1) nach Anspruch 1, wobei
die eine Wand (3) eine Haupterstreckungsrichtung aufweist, wobei die Haupterstreckungsrichtung zu der Fahrtrichtung (F) korrespondiert, insbesondere parallel zur Fahrtrichtung (F) ausgerichtet ist, und/oder wobei die Haupterstreckungsrichtung quer, insbesondere orthogonal, zur Drehachse (D) des mindestens einen Rotors (5) ausgerichtet ist.

3. Energieumwandlungseinheit (1) nach Anspruch 1 oder 2, wobei der Leitwerkskasten (7) gegenüber dem Verkehrsweg (21) im Übrigen geschlossen ist und/oder wobei der Leitwerkskasten (7) wenigstens ein Führungsblech (71, 72) zum Führen der Luftströmung (L) von einer Leitwerkskastenöffnung (70) zu der Öffnung (30), insbesondere mit einer zu Anströmrichtung korrespondierenden Luftströmungsrichtung im Bereich der Öffnung (30), umfasst.

4. Energieumwandlungseinheit (1) nach einem der vorstehenden Ansprüche, wobei die Schürze (73) schräg, vorzugsweise konkav, von der Leitwerkskastenöffnung (70) entgegen der Fahrtrichtung (F) vorsteht.

5. Energieumwandlungseinheit (1) nach einem der vorstehenden Ansprüche, wobei der Leitwerkskasten (7) die Öffnung (30) zumindest teilweise umgibt, insbesondere bedeckt, wobei der Leitwerkskasten (7) insbesondere die Drehachse (D) überdeckt, und/ oder, insbesondere und, wobei der Leitwerkskasten (7) sich in Vertikalrichtung (V) wenigstens so hoch wie die Öffnung (30) der Aufnahme (31) erstreckt.

6. Energieumwandlungseinheit (1) nach einem der vorstehenden Ansprüche, wobei die Energieumwandlungseinheit (1) einen, insbesondere auf dem Verkehrsweg (21), beweglichen Tragwagen, wie einen Kraftfahrzeuganhänger (13) oder einen Wagon, umfasst, wobei die Wand (3) an dem Tragwagen befestigt ist.

7. Energieumwandlungseinheit (1) nach einem der vorstehenden Ansprüche, wobei die Drehachse (D) des Rotors (5) quer, insbesondere orthogonal, zur Seitenfläche (33, 34) der mindestens einen Wand (3) ausgerichtet ist.

8. Energieumwandlungseinheit (1) nach einem der Ansprüche 1 bis 7, wobei die Öffnung (30) teilkreisförmig, insbesondere viertel- und/oder halbkreisförmig ist.

9. Energieumwandlungseinheit (1) nach einem der vorstehenden Ansprüche, wobei die Öffnung (30) sich oberhalb des Verkehrsweges (21) erstreckt und/oder, insbesondere und, wobei die Aufnahme (31) zumindest teilweise unterhalb des Verkehrswegs angeordnet ist.

10. Energieumwandlungseinheit (1) nach einem der vorstehenden Ansprüche, ferner umfassend
mindestens ein Leitblech (75), das sich an der Ober- und/oder Seitenkante entlang der Wand (3) erstreckt und schräg, insbesondere konkav, in Richtung des Verkehrsweges (21) von der Seitenfläche (33) vorsteht, wobei insbesondere das Leitblech (75) an einer zum Verkehrsweg (21) weisenden Kante eine in Vertikalrichtung (V) nach unten ragende Abkantung (77) aufweist.

11. Energieumwandlungsanordnung (10) umfassend mehrere Energieumwandlungseinheiten (1) nach Anspruch 1 bis 10, wobei die Wände der mehreren Energieumwandlungseinheiten (1) eine Systemwand bilden und mit einander fluchtende, insbesondere in einander übergehende, Seitenflächen (33) aufweisen.

12. Energieumwandlungssystem (100), umfassend mindestens eine Energieumwandlungseinheit (1) nach einem der Ansprüche 1 bis 10 oder eine Energieumwandlungsanordnung (10) nach Anspruch 11 und einen Verkehrsweg (21), wie eine Autostraße, einen Schienenweg für Schienenfahrzeuge (25) wie Züge oder eine Rollbahn für Luftfahrzeuge (27), wobei insbesondere die Wand zumindest abschnittsweise, insbesondere parallel, benachbart zu dem Verkehrsweg (21) verläuft.

13. Energieumwandlungssystem (100) nach Anspruch 12, wobei die Energieumwandlungseinheit (1) zwischen einem ersten und einem zweiten Verkehrsweg (21), insbesondere mit entgegengesetzter Fahrtrichtung, angeordnet ist, wobei die Aufnahme (31) eine erste Öffnung (30) an der ersten Seitenfläche der Wand aufweist, die auf den ersten Verkehrsweg (21) gerichtet ist, und wobei die Aufnahme (31) eine zweite Öffnung (30) an der zweiten, der ersten gegenüberliegenden, Seitenfläche der Wand aufweist, die auf den zweiten Verkehrsweg (21) gerichtet ist.

14. Energieumwandlungssystem (100) nach Anspruch 12, wobei die Energieumwandlungseinheit (1) eingerichtet und ausgelegt ist, eine Schubströmung eines Propeller- und/oder Düsenantriebs eines Luftfahrzeugs (27) in der Anströmungsrichtung zu empfangen.

15. Netzwerk (200) umfassend eine Energieumwandlungseinheit (1) nach einem der Ansprüche 1 bis 10, eine Energieumwandlungsanordnung (10) nach Anspruch 11, oder ein Energieumwandlungssystem (100) nach einem der Ansprüche 12 bis 14, ferner umfassend wenigstens einen elektrischen Verbraucher, wie eine Heizvorrichtung (250), insbesondere zum Beheizen des Verkehrswegs (21) und/oder mindestens einem Zuweg der Energieumwandlungseinheit (1), wenigstens eine elektrische Ladestation (220) für mindestens ein Fahrzeug, wenigstens eine Induktionsspulenanordnung zum induktiven Laden eines sich auf dem Verkehrsweg (21) befindenden Fahrzeugs,
wenigstens einen Stromspeicher (230), und/oder
wenigstens eine Konvertervorrichtung (15) zum Einspeisen der elektrischen Energie in ein Stromnetz, wie ein Gebäudestromnetz (240) oder ein öffentliches Stromnetz (210).

## Claims

1. An energy conversion unit (1) for converting wind energy into electrical energy, comprising:
at least one rotor (5) with a substantially horizontal axis of rotation (D), comprising a plurality of rotor blades (51) extending radially to the axis of rotation (D), wherein the rotor (5) has an inflow direction which corresponds to the axis of rotation (D), in particular is parallel to the axis of rotation (D),
a wall (3) to be arranged next to a traffic route (21) for vehicles (22, 23, 25, 27) which can move on the traffic route (21) in a direction of travel (F) and whose movement causes an air flow (L),
wherein the wall (3) has a receptacle (31) in which the rotor (5) is arranged, wherein the receptacle (31) has an opening (30) on a side surface of the wall (3) to be directed towards the traffic route (21), and wherein the axis of rotation (D) of the at least one rotor (5) is oriented substantially perpendicular to the direction of travel (F),
a tail box (7) for guiding the air flow (L) to the opening (30),
wherein the tail box (7) is mounted on the side surface (33) of the at least one wall (3) facing towards the traffic route (21) and is situated in front of the wall (3) in axial direction to the axis of rotation (D),
wherein the tail box (7) comprises a tail box opening (70) directed against the direction of travel (F), and
at least one apron (73) arranged above the tail box opening (70) projecting from the tail box opening (70) opposite the direction of travel (F), which is configured and arranged to guide the air flow (L) to the opening (30).

2. The energy conversion unit (1) according to Claim 1, wherein
the one wall (3) has a main direction of extension, wherein the main direction of extension corresponds to the direction of travel (F), in particular is oriented parallel to the direction of travel (F), and/or wherein the main direction of extension is oriented perpendicularly, in particular orthogonally, to the axis of rotation (D) of the at least one rotor (5).

3. The energy conversion unit (1) according to Claim 1 or 2, wherein
the tail box (7) is otherwise closed off from the traffic route (21) and/ or wherein the tail box (7) comprises at least one guide plate (71, 72) for guiding the air flow (L) from a tail box opening (70) to the opening (30), in particular in an air flow direction corresponding to the flow direction in the region of the opening (30).

4. The energy conversion unit (1) according to any one of the preceding claims, wherein the apron (73) projects obliquely, preferably concavely, from the tail box opening (70) opposite the direction of travel (F).

5. The energy conversion unit (1) according to any one of the preceding claims, wherein the tail box (7) at least partly surrounds, in particular covers, the opening (30), wherein the tail box (7) covers in particular the axis of rotation (D), and/or, in particular and, wherein, in the vertical direction (V), the tail box (7) extends at least as high as the opening (30) of the receptacle (31).

6. The energy conversion unit (1) according to any one of the preceding claims,
wherein
the energy conversion unit (1) comprises a mobile support carriage such as a motor vehicle trailer (13) or a wagon, in particular on the traffic route (21), wherein the wall (3) is attached to the support carriage.

7. The energy conversion unit (1) according to any one of the preceding claims,
wherein
the axis of rotation (D) of the rotor (5) is oriented perpendicularly, in particular orthogonally, to the side surface (33, 34) of the at least one wall (3).

8. The energy conversion unit (1) according to any one of Claims 1 to 7, wherein the opening (30) is part-circular, in particular a quarter circle and/or semi-circle.

9. The energy conversion unit (1) according to any one of the preceding claims,
wherein
the opening (30) extends above the traffic route (21) and/or, in particular and, wherein the receptacle (31) is arranged at least partly below the traffic route.

10. The energy conversion unit (1) according to any one of the preceding claims, further comprising
at least one deflector plate (75), which extends on the upper and/or side edge along the wall (3) and projects obliquely, in particular concavely, in the direction of the traffic route (21) from the side surface (33), wherein in particular the deflector plate (75) has a bend (77) projecting downwards in vertical direction (V) at an edge facing the traffic route (21).

11. An energy conversion assembly (10) comprising a plurality of energy conversion units (1) according to Claim 1 to 10, wherein
the walls of the plurality of energy conversion units (1) form a system wall and have side surfaces (33) which are aligned with one another, in particular merge into one another.

12. An energy conversion system (100), comprising at least one energy conversion unit (1) according to any one of Claims 1 to 10 or an energy conversion assembly (10) according to claim 11 and a traffic route (21), such as a road, a railway track for railed vehicles (25) such as trains or a runway for aircraft (27), wherein in particular the wall runs adjacent to the traffic route (21), at least in sections, in particular in parallel.

13. The energy conversion system (100) according to Claim 12, wherein
the energy conversion unit (1) is arranged between a first and a second traffic route (21), in particular with an opposite direction of travel, wherein the receptacle (31) has a first opening (30) on the first side surface of the wall, which is directed towards the first traffic route (21), and wherein the receptacle (31) has a second opening (30) on the second, the first opposite, side surface of the wall, which is directed towards the second traffic route (21).

14. The energy conversion system (100) according to Claim 12, wherein
the energy conversion unit (1) is arranged and adapted to receive a thrust flow from a propeller and/or jet propulsion of an aircraft (27) in the inflow direction.

15. A network (200) comprising an energy conversion unit (1) according to any one of Claims 1 to 10, an energy conversion assembly (10) according to Claim 11, or an energy conversion system (100) according to any one of Claims 12 to 14, further comprising at least one electrical consumer, such as a heating device (250), in particular for heating the traffic route (21) and/ or at least one access path of the energy conversion unit (1),
at least one electrical charging station (220) for at least one vehicle,
at least one induction coil arrangement for inductively charging a vehicle located on the traffic route (21),
at least one power storage unit (230), and/or
at least one converter device (15) for feeding the electrical energy into a power grid, such as a power grid of a building (240) or a public power grid (210).

## Revendications

1. Unité de conversion d'énergie (1) destinée à la conversion d'énergie éolienne en énergie électrique, comprenant :
- au moins un rotor (5) doté d'un axe de rotation (D) sensiblement horizontal, comprenant plusieurs pales de rotor (51) s'étendant radialement par rapport à l'axe de rotation (D), le rotor (5) présentant une direction d'attaque qui correspond à l'axe de rotation (D), en particulier qui est parallèle à l'axe de rotation (D),
- une paroi (3) destinée à être agencée à côté d'une voie de circulation (21) pour des véhicules (22, 23, 25, 27) qui peuvent se déplacer sur la voie de circulation (21) dans un sens de circulation (F) et dont le déplacement provoque un écoulement d'air (L), la paroi (3) présentant un réceptacle (31) dans lequel est agencé le rotor (5), le réceptacle (31) présentant une ouverture (30) sur une surface latérale de la paroi (3) à orienter vers la voie de circulation (21), et l'axe de rotation (D) de l'au moins un rotor (5) étant orienté sensiblement transversalement au sens de circulation (F),
- un caisson de guidage (7) destiné au guidage de l'écoulement d'air (L) vers l'ouverture (30),
le caisson de guidage (7) étant monté sur la surface latérale (33) de l'au moins une paroi (3) tournée vers la voie de circulation (21) et se trouvant devant la paroi (3) dans la direction axiale par rapport à l'axe de rotation (D),
le caisson de guidage (7) comprenant une ouverture de caisson de guidage (70) orientée dans le sens opposé au sens de circulation (F), et
- au moins une jupe (73) disposée au-dessus de l'ouverture de caisson de guidage (70), faisant saillie depuis l'ouverture de caisson de guidage (70) dans le sens opposé au sens de circulation (F), laquelle est adaptée et configurée pour guider l'écoulement d'air (L) vers l'ouverture (30).

2. Unité de conversion d'énergie (1) selon la revendication 1, dans laquelle la paroi (3) présente une direction d'extension principale, la direction d'extension principale correspondant au sens de circulation (F), étant en particulier orientée parallèlement au sens de circulation (F), et/ou dans laquelle la direction d'extension principale est orientée transversalement, en particulier perpendiculairement, à l'axe de rotation (D) de l'au moins un rotor (5).

3. Unité de conversion d'énergie (1) selon la revendication 1 ou 2, dans laquelle le caisson de guidage (7) est en outre fermé par rapport à la voie de circulation (21) et/ou dans laquelle le caisson de guidage (7) comprend au moins un déflecteur (71, 72) pour guider l'écoulement d'air (L) depuis une ouverture de caisson de guidage (70) jusqu'à l'ouverture (30), en particulier avec une direction d'écoulement d'air correspondant à la direction d'attaque dans la zone de l'ouverture (30).

4. Unité de conversion d'énergie (1) selon l'une quelconque des revendications précédentes, dans laquelle la jupe (73) fait saillie de manière oblique, de préférence concave, depuis l'ouverture de caisson de guidage (70) dans le sens opposé au sens de circulation (F).

5. Unité de conversion d'énergie (1) selon l'une quelconque des revendications précédentes, dans laquelle
le caisson de guidage (7) entoure, en particulier couvre, au moins en partie l'ouverture (30), le caisson de guidage (7) recouvrant en particulier l'axe de rotation (D) et/ou, en particulier et, dans laquelle le caisson de guidage (7) s'étend dans la direction verticale (V) au moins aussi haut que l'ouverture (30) du réceptacle (31).

6. Unité de conversion d'énergie (1) selon l'une quelconque des revendications précédentes, dans laquelle
l'unité de conversion d'énergie (1) comprend un chariot porteur en particulier mobile sur la voie de circulation (21), tel qu'une remorque de véhicule automobile (13) ou un wagon, la paroi (3) étant fixée au chariot porteur.

7. Unité de conversion d'énergie (1) selon l'une quelconque des revendications précédentes, dans laquelle
l'axe de rotation (D) du rotor (5) est orienté transversalement, en particulier perpendiculairement, à la surface latérale (33, 34) de l'au moins une paroi (3).

8. Unité de conversion d'énergie (1) selon une des revendications 1 à 7, dans laquelle l'ouverture (30) est en forme d'arc de cercle, en particulier en forme de quart de cercle et/ou de demi-cercle.

9. Unité de conversion d'énergie (1) selon l'une quelconque des revendications précédentes, dans laquelle l'ouverture (30) s'étend au-dessus de la voie de circulation (21) et/ou, en particulier et, dans laquelle le réceptacle (31) est agencé au moins en partie en dessous de la voie de circulation.

10. Unité de conversion d'énergie (1) selon l'une quelconque des revendications précédentes, comprenant en outre
au moins une tôle-guide (75), qui s'étend le long de la paroi (3) sur le bord supérieur ou latéral et qui fait saillie de manière oblique, en particulier concave, en direction de la voie de circulation (21) depuis la surface latérale (33), la tôle-guide (75) présentant en particulier, sur un bord tourné vers la voie de circulation (21), un repli (77) faisant saillie dans la direction verticale (V) vers le bas.

11. Agencement de conversion d'énergie (10) comprenant plusieurs unités de conversion d'énergie (1) selon les revendications 1 à 10, dans lequel les parois des plusieurs unités de conversion d'énergie (1) forment une paroi de système et présentent des parois latérales (33) alignées les unes avec les autres, en particulier se confondant les unes avec les autres.

12. Système de conversion d'énergie (100), comprenant au moins une unité de conversion d'énergie (1) selon une des revendications 1 à 10 ou un agencement de conversion d'énergie (10) selon la revendication 11 et une voie de circulation (21), telle qu'une route pour automobiles, une voie ferrée pour véhicules ferroviaires (25), tels que des trains, ou une piste de roulement pour aéronefs (27), la paroi s'étendant en particulier, au moins sur certaines parties, de manière adjacente, en particulier parallèle, à la voie de circulation (21).

13. Système de conversion d'énergie (100) selon la revendication 12, dans lequel l'unité de conversion d'énergie (1) est agencée entre une première et une seconde voie de circulation (21), en particulier avec des sens de circulation opposés, le réceptacle (31) présentant une première ouverture (30) sur la première surface latérale de la paroi, qui est orientée vers la première voie de circulation (21), et dans lequel le réceptacle (31) présente une seconde ouverture (30) sur la seconde surface latérale, opposée à la première, de la paroi, qui est orientée vers la seconde voie de circulation (21).

14. Système de conversion d'énergie (100) selon la revendication 12, dans lequel l'unité de conversion d'énergie (1) est configurée et adaptée pour recevoir un écoulement de poussée d'une propulsion par hélice et/ou d'une propulsion par réaction d'un aéronef (27) dans la direction d'attaque.

15. Réseau (200) comprenant une unité de conversion d'énergie (1) selon une des revendications 1 à 10, un agencement de conversion d'énergie (10) selon la revendication 11 ou un système de conversion d'énergie (100) selon une des revendications 12 à 14, comprenant en outre au moins un consommateur électrique, tel qu'un dispositif de chauffage (250), en particulier pour le chauffage de la voie de circulation (21) et/ou d'au moins une voie d'accès de l'unité de conversion d'énergie (1), au moins une station de recharge électrique (220) pour au moins un véhicule, au moins un agencement de bobine d'induction pour la charge par induction d'un véhicule se trouvant sur la voie de circulation (21),
au moins un organe de stockage d'électricité (230), et/ou au moins un dispositif convertisseur (15) destiné à l'alimentation de l'énergie électrique dans un réseau électrique, tel qu'un réseau électrique de bâtiment (240) ou un réseau électrique public (210).
